# EUROPÄISCHE PATENTSCHRIFT

(11) **EP 1 338 469 B1**
(45) Veröffentlichungstag und Bekanntmachung des Hinweises auf die Patenterteilung: **28.08.2013**
(21) Anmeldenummer: 03000974.0
(22) Anmeldetag: 17.01.2003
(51) Int. Cl.: B60Q 1/26

(54) **Vorrichtung und Verfahren zur Ansteuerung mindestens einer Leuchte eines Kraftfahrzeuges**
Device and method to control at least one vehicle lamp
Dispositif et procédé de contrôle d'au moins un feu de véhicule

(30) Priorität: 21.02.2002 DE 10207470
(43) Veröffentlichungstag der Anmeldung: 27.08.2003
(73) Patentinhaber: Volkswagen Aktiengesellschaft, 38440 Wolfsburg (DE)
(72) Erfinder: Müller, Michael, 38518 Gifhorn (DE)

(56) Entgegenhaltungen:
- BE-A- 559 166
- DE-A1- 3 123 277
- DE-A1- 4 221 096
- DE-A1- 19 753 096
- DE-A1- 19 926 883
- FR-A- 2 649 054
- FR-A- 2 700 508
- US-A- 3 320 586

## Beschreibung

Die Erfindung betrifft eine Leuchte für ein Kraftfahrzeug, bei der in einem Leuchtenkörper oder in einem Teil des Leuchtenkörpers als Leuchtdioden ausgebildete Leuchtquellen zur Lichtemission unterschiedlicher Farben angeordnet sind, und der eine Steuereinrichtung zur Ansteuerung der Leuchtdioden zugeordnet ist sowie ein Verfahren zur Ansteuerung mindestens einer Leuchte eines Kraftfahrzeuges, bei der in einem Leuchtkörper oder in einem Teil des Leuchtenkörpers als Leuchtdioden ausgebildete Leuchtquellen zur Lichtemission unterschiedlicher Farben angeordnet sind.

Aus der nicht vorveröffentlichten deutschen Patentanmeldung 100 43 660.9 ist eine Leuchte für ein Kraftfahrzeug mit Leuchtdioden bekannt, bei der zur optimalen Nutzung des Bauraumes und der Größe der Leuchte vorgeschlagen wird, dass innerhalb eines gemeinsamen Leuchtenkörpers mindestens zwei Matrizen von Leuchtdioden (LED) unterschiedlicher Leuchtfarbe zu einer Summenmatrix angeordnet sind.

Die DE 197 53 096 A1 beschreibt eine Kraftfahrzeugleuchte mit Leuchtdioden einer einheitlichen Farbgebung. Dabei können rote Leuchtdioden gleicher Bauart verwendet werden, wobei zur Veränderung der Lichtstärke die Anzahl der benutzten Leuchtdioden verändert wird. Außerdem können weitere Leuchtdioden anderer Farben hinzugenommen werden, wobei durch additive Farbmischung weitere Farben erzeugbar sind.

Die US 3 320 586 beschreibt eine visuelle Signalvorrichtung für ein Fahrzeug zum Anzeigen verschiedener Brems- und Gefahrenzustände.

Die FR 2 700 508 A1 beschreibt eine Fahrzeugleuchte, bei der verschiedene Lichtquellen mit derselben Leistung, aber unterschiedlicher Lichtstärke betrieben werden können. Dabei werden die unterschiedlichen Lichtstärken mittels einer lichtabschwächenden Scheibe erzeugt.

Die FR 2 649 054 A1 beschreibt eine Leuchteneinrichtung zum Visualisieren der Bremsintensität. Dabei werden für unterschiedliche Stufen der Bremsintensität verschiedene Abstrahlmuster vorgesehen, die durch die Ansteuerung einzelner dafür vorgesehener Leuchten in verschiedener Art erzielt werden können. Je nach Stufe können diese beispielsweise in einem Blinkbetrieb angesteuert werden oder es können weitere Bremsleuchten gegebenenfalls unterschiedlicher Farbe und größerer Leuchtstärke hinzugenommen werden.

Die DE 199 26 883 A1 beschreibt eine Fahrzeugleuchte und ein dazugehöriges Verfahren zum Anzeigen eines Bremsvorgangs. Dabei wird in Abhängigkeit von der Verzögerung des Kraftfahrzeugs ein Leuchtsignal mit einem zusätzlichen Informationsgehalt erzeugt.

Die BE 559 166 A beschreibt eine Fahrzeugleuchte mit zwei Glühlampen verschiedener Farbe und verschiedener Intensität. Dabei sind die beiden Glühlampen entlang der optischen Achse der Fahrzeugleuchte angeordnet, wobei die leuchtschwächere Glühlampe zwischen Fokus und Lichtscheide angeordnet ist und über einen großen Winkelbereich sichtbar ist, während die leuchtstärkere Glühlampe in der Nähe des Fokus in Richtung Reflektor angeordnet ist und in einem kleineren Winkelbereich sichtbar ist.

Es ist die Aufgabe der Erfindung, eine Leuchte und ein Verfahren zur Ansteuerung mindestens einer Leuchte eines Kraftfahrzeuges zu schaffen, bei welcher der Bauraum und die Größe einer Leuchte für ein Kraftfahrzeug, insbesondere einer Heckleuchte, optimal ausgenutzt wird und ein symmetrisches Erscheinungsbild am Fahrzeug vermittelt.

Die Aufgabe wird durch die Merkmale der Patentansprüche 1 und 7 gelöst. Vorteilhafte Aus- und Weiterbildungen sind in den Unteransprüchen dargestellt.

Gemäß der Erfindung ist bei einer Leuchte, bei der in einem Leuchtenkörper oder in einem Teil des Leuchtenkörpers mehrfarbige Leuchtdioden angeordnet sind, vorgesehen, dass die Leuchtdioden zumindest in einer ersten Farbe in einem ersten Betriebsmodus zur gleichbleibenden Abgabe von Licht einer ersten Lichtstärke angesteuert werden und die Leuchtquellen zumindest in einer zweiten Farbe in dem ersten Betriebsmodus zur Abgabe von Licht einer zweiten Lichtstärke in einem definierten Takt angesteuert werden. Mit anderen Worten, über die Ansteuerung der ersten Farbe der mehrfarbigen Leuchtquellen wird eine Grundausleuchtung bei eingeschalteter Leuchte erreicht, die durch die getaktete Ansteuerung der zweiten Farbe der mehrfarbigen Leuchtquellen übersteuert wird. Eine solche Leuchte kann insbesondere als Heckleuchte bzw. als Teil einer Heckleuchte des Kraftfahrzeuges zum Einsatz kommen, beispielsweise zur Realisierung einer kombinierten Leuchte oder eines Leuchtenteils mit Schlusslicht- und Blinklichtfunktion, wobei die erste Farbe die Schlusslichtfunktion und die zweite Farbe die Blinklichtfunktion bildet.

Die abgegebene Lichtstärke des Lichtes der ersten Farbe ist zumindest im ersten Betriebsmodus geringer als die abgegebene Lichtstärke des Lichtes der zweiten Farbe. Vorzugsweise liegt die abgegebene Lichtstärke des Lichtes der ersten Farbe im unteren Bereich der abgebbaren Lichtstärke der Leuchtdioden, vorzugsweise im Bereich von 5 bis 25 %. Die abgegebene Lichtstärke des Lichtes der zweiten Farbe liegt dabei vorzugsweise im oberen Bereich der abgebbaren Lichtstärke der Leuchtdioden, vorzugsweise im Bereich von 75 bis 95%, wodurch eine gute Überleuchtung der ersten Farbe durch die zweite Farbe erreicht wird, in den Ansteuerpausen der zweiten Farbe, das Licht der ersten Farbe jedoch gut sichtbar ist.

Nach der Erfindung ist ein zweiter Betriebsmodus vorgesehen, in dem die erste Farbe der mehrfarbigen Leuchtquellen, nicht jedoch die zweite Farbe der mehrfarbigen Leuchtquellen angesteuert werden.

In einer Ausführungsform entspricht die abgegebene Lichtstärke des Lichtes der ersten Farbe im zweiten Betriebsmodus der abgegebenen Lichtstärke des Lichtes der ersten Farbe im ersten Betriebsmodus, wodurch für den Betrachter ein einheitliches Erscheinungsbild geschaffen wird.

Eine bevorzugte Ausbildung der Erfindung sieht vor, die Leuchtdioden in Matrizen anzuordnen.

Nachfolgend wird die Erfindung anhand eines Ausführungsbeispiels näher erläutert. Die zugehörigen Zeichnungen zeigen:
- Figur 1: die Rückansicht eines Fahrzeuges mit zwei symmetrisch angeordneten Heckleuchten,
- Figur 2: ein Heckleuchtenmodul.

Das in Figur gezeigte Fahrzeug weist vier Heckleuchtenmodule 1a,1b und 2a, 2b auf, wobei jeweils immer zwei Heckleuchtenmodule 1a,1b; 2a,2b eine Heckleuchte bilden. Im Ausführungsbeispiel sind dabei beide Heckleuchten symmetrisch angeordnet, wobei die Heckleuchtenmodule 1b,2b jeweils dem Kofferraumdeckel 6 des Fahrzeuges zugeordnet sind. Mit Hilfe der Tuben 3 und der Leuchtenteile 4a,4b wird jeweils die Schlusslichtfunktion realisiert, d. h. in dem entsprechend angesteuerten Zustand (zweiter Betriebsmodus) leuchten die Tuben 3 und die Leuchtenteile 4a,4b rot, wobei die abgegebene Lichtstärke des Lichtes im unteren Bereich der abgebbaren Lichtstärke der Leuchtquellen liegt, vorzugsweise um ca.10% der abgebbaren Lichtstärke.

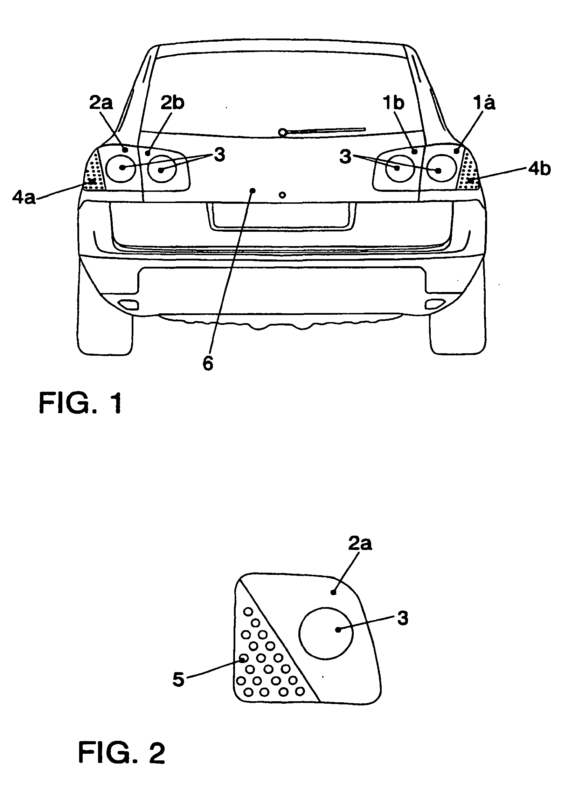

Im Ausführungsbeispiel wurden zumindest im Leuchtenteil 4a,4b als Leuchtquellen Leuchtdioden 5 (Fig.2) eingesetzt. Diese Leuchtdioden 5 sind als mehrfarbige Leuchtdioden ausgebildet, so dass sie bei entsprechender Ansteuerung neben rotem Licht auch gelbes Licht zur Realisierung einer Blinkfunktion (erster Betriebsmodus) abgeben können. Dabei erfolgt im ersten Betriebsmodus die Ansteuerung derart, dass die Leuchtdioden 5 ein gleichbleibendes Licht roter Farbe abgeben, wobei die Lichtstärke des roten Lichtes vorteilhafterweise der des ersten Betriebsmodus entspricht. Wird nun die Blinkfunktion einer oder beider Heckleuchten eingeschaltet, werden die Leuchtdioden 5 derart angesteuert, dass das rote Licht weiterhin gleichbleibend abgegeben wird, jedoch gleichzeitig die Leuchtdioden getaktet gelbes Licht abgeben. Die Lichtstärke des gelben Lichtes ist höher, und zwar in der Weise, dass das gelbe Licht das rote Licht weitgehenst übersteuert. Im Ausführungsbeispiel liegt die abgegebene Lichtstärke des gelben Lichtes bei ca. 90 % der von den Leuchtdioden abgebbaren Lichtstärke. In den Ansteuerpausen der Blinkfunktion strahlen die Leuchtenteile 4a,4b rotes Licht ab. Insbesondere bei einer Fahrtrichtungsanzeige, wenn nur eine der Heckleuchten sich im ersten Betriebsmodus befindet, wird somit für das Schlusslicht ein symmetrisches Erscheinungsbild am Fahrzeug vermittelt.

Zur Realisierung des Bremslichtes werden die Tuben 3 zur Abgabe von rotem Licht mit einer Lichtstärke, die um ca. 60 % des abgebbaren Lichtes liegt, angesteuert.

## Patentansprüche

1. Leuchte für ein Kraftfahrzeug, bei der in einem Leuchtenkörper (1a, 1b; 2a, 2b) oder in einem Teil des Leuchtenkörpers (4a, 4b) mehrfarbige Leuchtdioden (5) zur Lichtemission unterschiedlicher Farben angeordnet sind, und der eine Steuereinrichtung zur Ansteuerung der Leuchtdioden (5) zugeordnet ist, wobei die Steuerungseinrichtung derart ausgebildet ist, dass die Leuchtdioden zumindest in einer ersten Farbe in einem ersten Betriebsmodus zur gleichbleibenden Abgabe von Licht einer ersten Lichtstärke angesteuert werden und die Leuchtdioden zumindest in einer zweiten Farbe in dem ersten Betriebsmodus zur Abgabe von Licht einer zweiten Lichtstärke in einem definierten Takt angesteuert werden, wobei , im ersten Betriebsmodus, die abgegebene Lichtstärke des Lichtes der ersten Farbe geringer ist als die abgegebene Lichtstärke des Lichtes der zweiten Farbe, so dass das Licht der ersten Farbe vom Licht der zweiten Farbe übersteuert wird.

2. Leuchte nach Anspruch 1, **dadurch gekennzeichnet, dass** die abgegebene Lichtstärke des Lichtes der ersten Farbe im unteren Bereich der abgebbaren Lichtstärke der mehrfarbigen Leuchtdioden, vorzugsweise im Bereich von 5 bis 25%, liegt.

3. Leuchte nach einem der Ansprüche 1 oder 2, **dadurch gekennzeichnet, dass** die abgegebene Lichtstärke des Lichtes der zweiten Farbe im oberen Bereich der abgebbaren Lichtstärke der mehrfarbigen Leuchtdioden, vorzugsweise im Bereich von 75 bis 95% liegt.

4. Leuchte nach einem der Ansprüche 1 bis 3, **dadurch gekennzeichnet, dass** die Steuereinrichtung derart ausgebildet ist, dass in einem zweiten Betriebsmodus die erste Farbe der mehrfarbigen Leuchtdioden(5), nicht jedoch die zweite Farbe der mehrfarbigen Leuchtdioden (5), angesteuert werden.

5. Leuchte nach Anspruch 4, **dadurch gekennzeichnet, dass** abgegebene Lichtstärke des Lichtes der ersten Farbe im zweiten Betriebsmodus der abgegebenen Lichtstärke des Lichtes der ersten Farbe im ersten Betriebsmodus weitestgehend entspricht.

6. Leuchte nach einem der Ansprüche 1 bis 5, **dadurch gekennzeichnet, dass** die Leuchtdioden (5) In Matrizen angeordnet sind.

7. Verfahren zur Ansteuerung mindestens einer Leuchte eines Kraftfahrzeuges, bei der in einem Leuchtenkörper (1a, 1 b; 2a, 2b) oder in einem Teil des Leuchtenkörpers (4a,4b) mehrfarbig Leuchtdioden (5) zur Lichtemission unterschiedlicher Farben angeordnet sind, wobei die Leuchtdioden zumindest in einer ersten Farbe in einem ersten Betriebsmodus zur gleichbleibenden Abgabe von Licht einer ersten Lichtstärke angesteuert werden und die Leuchtdioden zumindest in einer zweiten Farbe in dem ersten Betriebsmodus zur Abgabe von Licht einer zweiten Lichtstärke in einem definierten Takt angesteuert werden, wobei die abgegebene Lichtstärke des Lichtes der ersten Farbe im ersten Betriebsmodus geringer ist als die abgegebene Lichtstärke des Lichtes der zweiten Farbe, so dass das Licht der ersten Farbe vom Licht der zweiten Farbe übersteuert wird.

8. Verfahren nach Anspruch 7, **dadurch gekennzeichnet, dass** die abgegebene Lichtstärke des Lichtes der ersten Farbe im unteren Bereich der abgebbaren Lichtstärke der mehrfarbigen Leuchtdioden, vorzugsweise im Bereich von 5 bis 25%, liegt.

9. Verfahren nach Anspruch 7 oder 8, **dadurch gekennzeichnet, dass** die abgegebene Lichtstärke des Lichtes der zweiten Farbe im oberen Bereich der abgebbaren Lichtstärke der mehrfarbigen Leuchtdioden, vorzugsweise im Bereich von 75 bis 95% liegt.

10. Verfahren nach einem der Ansprüche 7 bis 9, **dadurch gekennzeichnet, dass** in einem zweiten Betriebsmodus die erste Farbe der mehrfarbigen Leuchtdioden (5), nicht jedoch die zweite Farbe der mehrfarbigen Leuchtdioden (5), angesteuert werden.

11. Verfahren nach Anspruch 10, **dadurch gekennzeichnet, dass** die abgegebene Lichtstärke des Lichtes der ersten Farbe im zweiten Betriebsmodus der abgegebenen Lichtstärke des Lichtes der ersten Farbe im ersten Betriebsmodus entspricht.

## Claims

1. Lamp for a motor vehicle, in which lamp multicoloured light-emitting diodes (5) for emitting light of different colours are arranged in a lamp body (1a, 1b; 2a, 2b) or in a portion of the lamp body (4a, 4b), and which lamp has an associated control device for driving the light-emitting diodes (5), wherein the control device is designed in such a way that the light-emitting diodes are driven to constantly output light of a first light intensity at least in a first colour in a first operating mode, and the light-emitting diodes are driven to output light of a second light intensity in a defined cycle at least in a second colour in the first operating mode, wherein, in the first operating mode, the output light intensity of the light of the first colour is lower than the output light intensity of the light of the second colour, so that the light of the first colour is overridden by the light of the second colour.

2. Lamp according to Claim 1, **characterized in that** the output light intensity of the light of the first colour is in the lower region of the light intensity, which can be output, of the multicoloured light-emitting diodes, preferably in the range of from 5 to 25%.

3. Lamp according to either of Claims 1 and 2, **characterized in that** the output light intensity of the light of the second colour is in the upper region of the light intensity, which can be output, of the multicoloured light-emitting diodes, preferably in the range of from 75 to 95%.

4. Lamp according to one of Claims 1 to 3, **characterized in that** the control device is designed in such a way that the first colour of the multicoloured light-emitting diodes (5), but not the second colour of the multicoloured light-emitting diodes (5), is driven in a second operating mode.

5. Lamp according to Claim 4, **characterized in that** the output light intensity of the light of the first colour in the second operating mode largely corresponds to the output light intensity of the light of the first colour in the first operating mode.

6. Lamp according to one of Claims 1 to 5, **characterized in that** the light-emitting diodes (5) are arranged in matrices.

7. Method for driving at least one lamp of a motor vehicle, in which lamp multicoloured light-emitting diodes (5) for emitting light of different colours are arranged in a lamp body (1a, 1b; 2a, 2b) or in a portion of the lamp body (4a, 4b), wherein the light-emitting diodes are driven to constantly output light of a first light intensity at least in a first colour in a first operating mode, and the light-emitting diodes are driven to output light of a second light intensity in a defined cycle at least in a second colour in the first operating mode, wherein, in the first operating mode, the output light intensity of the light of the first colour is lower than the output light intensity of the light of the second colour, so that the light of the first colour is overridden by the light of the second colour.

8. Method according to Claim 7, **characterized in that** the output light intensity of the light of the first colour is in the lower region of the light intensity, which can be output, of the multicoloured light-emitting diodes, preferably in the range of from 5 to 25%.

9. Method according to either of Claims 7 and 8, **characterized in that** the output light intensity of the light of the second colour is in the upper region of the light intensity, which can be output, of the multicoloured light-emitting diodes, preferably in the range of from 75 to 95%.

10. Method according to one of Claims 7 to 9, **characterized in that** the first colour of the multicoloured light-emitting diodes (5), but not the second colour of the multicoloured light-emitting diodes (5), is driven in a second operating mode.

11. Method according to Claim 10, **characterized in that** the output light intensity of the light of the first colour in the second operating mode corresponds to the output light intensity of the light of the first colour in the first operating mode.

## Revendications

1. Lampe pour véhicule automobile, dans laquelle des diodes luminescentes (5) de plusieurs couleurs, qui émettent de la lumière de différentes couleurs, sont disposées dans un corps de lampe (1a, 1b; 2a, 2b) ou dans une partie (4a, 4b) du corps de lampe et à laquelle un dispositif de commande est associé pour commander les diodes luminescentes (5),
le dispositif de commande étant configuré de telle sorte que dans un premier mode de fonctionnement, les diodes luminescentes d'au moins une première couleur sont commandées de manière à émettre de manière permanente une lumière à une première intensité lumineuse et que dans le premier mode de fonctionnement, les diodes luminescentes d'au moins une deuxième couleur sont commandées de manière à émettre à une cadence définie de la lumière d'une deuxième intensité lumineuse,
l'intensité lumineuse de la lumière de la première couleur émise dans le premier mode de fonctionnement étant plus basse que l'intensité lumineuse de la lumière émise dans la deuxième couleur, de telle sorte que la lumière de la première couleur soit saturée par la lumière de la deuxième couleur.

2. Lampe selon la revendication 1, **caractérisée en ce que** l'intensité lumineuse de la lumière émise à la première couleur est située dans la partie inférieure de l'intensité lumineuse que peuvent émettre les diodes luminescentes de plusieurs couleurs, de préférence de l'ordre de 5 à 25 %.

3. Lampe selon l'une des revendications 1 ou 2, **caractérisée en ce que** l'intensité lumineuse de la lumière émise dans la deuxième couleur est située dans la partie supérieure de l'intensité lumineuse que peuvent émettre les diodes luminescentes de plusieurs couleurs, de préférence de l'ordre de 75 à 95 %.

4. Lampe selon l'une des revendications 1 à 3, **caractérisée en ce que** le dispositif de commande est configuré de telle sorte que dans un deuxième mode de fonctionnement, la première couleur des diodes luminescentes (5) de plusieurs couleurs soit saturée mais que la deuxième couleur des diodes luminescentes (5) de plusieurs couleurs ne le soit pas.

5. Lampe selon la revendication 4, **caractérisée en ce que** dans le deuxième mode de fonctionnement, l'intensité lumineuse de la lumière émise dans la première couleur correspond à l'intensité lumineuse de la lumière émise dans la première couleur dans le premier mode de fonctionnement.

6. Lampe selon l'une des revendications 1 à 5, **caractérisée en ce que** les diodes luminescentes (5) sont disposées en matrices.

7. Procédé de commande d'au moins une lampe d'un véhicule automobile, dans' lequel des diodes luminescentes (5) qui émettent de la lumière de différentes couleurs sont disposées dans un corps de lampe (1a, 1b; 2a, 2b) ou dans une partie (4a, 4b) du corps de lampe,
les diodes luminescentes d'au moins une première couleur étant commandées dans un premier mode de fonctionnement de manière à délivrer de manière permanente de la lumière à une première intensité lumineuse et les diodes luminescentes d'au moins une deuxième couleur étant commandées dans le premier mode de fonctionnement de manière à émettre de la lumière à une deuxième intensité lumineuse et à une cadence définie, l'intensité lumineuse de la lumière émise dans la première couleur dans le premier mode de fonctionnement étant plus basse que l'intensité de la lumière émise dans la deuxième couleur, de telle sorte que la lumière de la première couleur soit saturée par la lumière de la deuxième couleur.

8. Procédé selon la revendication 7, **caractérisé en ce que** l'intensité de la lumière émise dans la première couleur est située dans la partie inférieure de l'intensité lumineuse que peuvent émettre les diodes luminescentes de plusieurs couleurs, de préférence de l'ordre de 5 à 25 %.

9. Procédé selon l'une des revendications 7 et 8, **caractérisé en ce que** l'intensité lumineuse de la lumière émise dans la deuxième couleur est située dans la partie supérieure de l'intensité lumineuse que peuvent émettre les diodes luminescentes de plusieurs couleurs, de préférence de l'ordre de 75 à 95 %.

10. Procédé selon l'une des revendications 7 à 9, **caractérisé en ce que** le dispositif de commande est configuré de telle sorte que dans un deuxième mode de fonctionnement, la première couleur des diodes luminescentes (5) de plusieurs couleurs soit saturée mais que la deuxième couleur des diodes luminescentes (5) de plusieurs couleurs ne le soit pas.

11. Procédé selon la revendication 10, **caractérisé en ce que** dans le deuxième mode de fonctionnement, l'intensité lumineuse de la lumière émise dans la première couleur correspond à l'intensité lumineuse de la lumière émise dans la première couleur dans le premier mode de fonctionnement.
